# EUROPÄISCHE PATENTSCHRIFT

(11) **EP 1 180 453 B1**
(45) Veröffentlichungstag und Bekanntmachung des Hinweises auf die Patenterteilung: **22.03.2006**
(21) Anmeldenummer: 01117520.5
(22) Anmeldetag: 20.07.2001
(51) Int. Cl.: B60R 5/04

(54) **Laderaumabdeckung für Kraftwagen, insbesondere für Kombinations-Personenkraftwagen**
Load compartment cover for vehicles, in particular for station wagons
Couvercle pour le compartiment de charge d'un véhicule, notamment véhicule familial

(30) Priorität: 11.08.2000 DE 10040030
(43) Veröffentlichungstag der Anmeldung: 20.02.2002
(73) Patentinhaber: BOS GmbH & Co. KG, 73760 Ostfildern (DE)
(72) Erfinder: Butz, Peter, 20149 Hamburg (DE); Sitzler, Wolfgang, 42111 Wuppertal (DE)
(74) Vertreter: Patentanwälte Ruff, Wilhelm, Beier, Dauster & Partner

(56) Entgegenhaltungen:
- DE-A- 19 728 547
- DE-C- 10 033 381

## Beschreibung

Die Erfindung betrifft eine Laderaum-Abdeck- und/oder Laderaum-Trennvorrichtung für den Lade- oder Gepäckraum eines Fahrzeugs wie z.B. eines Kombinationskraftwagens, entsprechend dem Oberbegriff des Anspruchs 1. Eine solche Laderaum-Abdeck- und/oder Trennvorrichtung ist beispielsweise in der DE 43 36 380 C2 beschrieben.

Die bekannte Vorrichtung gemäß der gattungsbildenden DE 43 36 380 C2 weist als Aufnahmehalterung ein Rollogehäuse auf, welches als Werkstoffbahn eine entgegen dem Rückstellmoment eines Federmotors von einer Wickelwelle abrollbare Netzbahn enthält. Der innenseitige Rand der Netzbahn ist an der Wickelwelle befestigt und der freie endseitige Randbereich der Netzbahn ist mit einer Haltestange versehen, deren etwa pilzkopfartige beiden Enden in taschenförmigen Aufnahmen innen unterhalb des Fahrzeugdachs lösbar formschlüssig gehalten sind.

Das Rollogehäuse gemäß der DE 43 36 380 C2 ist in im einzelnen nicht dargestellter Weise rückseitig der Rücksitzlehne einer Fond-Sitzreihe angebracht (vgl. DE 43 36 380 C2 Spalte 3 Zeilen 52-56).

Eine Aufnahmehalterung (Rollogehäuse) entsprechend der durch die DE 43 36 380 C2 bezeichneten Gattung kann, wie etwa in der DE 44 38 910 C1 beschrieben, neben einer vertikal aufspannbaren Netzbahn auch eine horizontal aufspannbare Werkstoffbahn in einem gesonderten Werkstoffspeicher, wie z.B. auf einer Wickelwelle, enthalten. In einem solchen Falle bildet die Netzbahn eine Rückhalte- oder Trennvorrichtung und die horizontal aufspannbare Werkstoffbahn, z.B. in Form eines Rollotuchs, eine Laderaumabdeckung.

Zusätzlich ist es außerdem möglich, in der Aufnahmehalterung einen dritten Werkstoffspeicher für eine insbesondere senkrecht nach unten aufspannbare Werkstoffbahn, beispielsweise in Form einer Netzbahn, vorzusehen, um in Fahrzeugfahrtrichtung nach vorn offene Lücken, z.B. durch Umgruppierung von Sitzen entstanden, schließen zu können. Grundsätzlich können derartige Werkstoffbahnen auch als gesonderten Werkstoffspeichern (z.B. Wickelwellen) zugeordneten Werkstoff-Längsteilbahnen, etwa wie in der EP 0 909 679 A2 beschrieben, ausgebildet sein.

In der Praxis ist folgende Anbringung des Rollogehäuses (Aufnahmehalterung) gemäß der DE 43 36 380 C2 üblich: Die Fondsitzgruppe weist drei Sitzflächen bei einer durchgehenden Sitzbank oder bei einem Einzelsitz und einem Doppelsitz auf. Die Sitzlehne ist entsprechend im Verhältnis 1/3 : 2/3 geteilt. Die 1/3-Sitzlehne ist einer randseitigen Einzelsitzfläche bzw. einem randseitigen Einzelsitz, zugeordnet, während die Doppelsitzlehne den beiden anderen verbleibenden Sitzflächen, entweder einer insgesamt durchgehenden Sitzbank oder einer Doppelsitzbank, zugeordnet ist.

Sowohl die 1/3-Sitzlehne als auch die 2/3-Sitzlehne sind schwenkarretierbar angeordnet. Die Aufnahmehalterung (Rollogehäuse) ist lediglich rückseitig der 2/3-Sitzlehne lösbar mittels etwa schwalbenschwanzförmiger Befestigungsmittel gehalten. Wenn also die Vorrichtung gemäß der DE 43 36 380 C2 aus dem Fahrzeug entnommen werden soll, müssen beide Sitzlehnen nach vorn verschwenkt und die Aufnahmehalterung (Rollogehäuse) quer zur Fahrtrichtung aus dem schwalbenschwanzförmigen Formschluß heraus verschoben und seitlich durch eine offene hintere Fahrzeugtür entnommen werden.

Ansonsten gestattet die Vorrichtung gemäß der DE 43 36 380 C2 noch die Möglichkeit, die an der Aufnahmehalterung (Rollogehäuse) nicht befestigte 1/3-Sitzlehne im Falle eines längeren Ladeguts nach vorn zu klappen, wobei die Netzbahn in ihrem aufgespannten Zustand verbleiben kann. Außerdem ist es bei der bekannten Vorrichtung möglich, - zweckmäßig nach Einrollen der Netzbahn - die 2/3-Sitzlehne einschließlich der an ihr angebrachten Aufnahmehalterung gemeinsam mit der 1/3-Sitzlehne im Bedarfsfall in Fahrtrichtung nach vom zu schwenken.

Die mit der Laderaum-Abdeck- und/oder Trennvorrichtung gemäß der DE 43 36 380 C2 einhergehende Verwendungsweise wird als zu unflexibel empfunden.

Ausgehend vom Gegenstand der DE 43 36 380 C2, liegt der Erfindung die Aufgabe zugrunde, eine Laderaum-Abdeck- und/oder Trennvorrichtung zu schaffen, welche in der praktischen Verwendungsweise wesentlich mehr Möglichkeiten als bisher gestattet.

Diese Aufgabe wird entsprechend der Gesamtheit der Merkmale des Patentanspruchs 1 gelöst.

Für die Erfindung ist es wesentlich, dass die Aufnahmehalterung für jede schwenkbare Sitzlehne längsseitige Kupplungsmittel aufweist. Demnach bietet die Erfindung, im Unterschied zum eingangs geschilderten gattungsgemäßen Stand der Technik, zunächst die Möglichkeit, wahlweise jede beliebige Sitzlehne von der Aufnahmehalterung (Rollogehäuse) zu lösen und zur Schaffung eines Durchladeraums nach vorn zu klappen, während die verbleibende Sitzlehne die Aufnahmehalterung gemeinsam mit der noch zu beschreibenden stirnseitigen Halterung entweder bei jeweils aufgespannter oder bei eingefahrener Werkstoffbahn weiterhin trägt.

Außerdem ist es bei Anwendung der Erfindung ebenfalls möglich, im Bedarfsfalle sämtliche Sitzlehnen gemeinsam mit der an ihnen rückseitig gehaltenen Aufnahmehalterung nach vom zu verschwenken. Dabei kann die rückseitige Ankupplung der Aufnahmehalterung auch auf zwei Sitzlehnen oder im Bedarfsfalle auch auf nur eine Sitzlehne beschränkt sein.

Weiterhin weist die erfindungsgemäße Aufnahmehalterung zusätzlich zu ihren längsseitigen Kupplungsmitteln an beiden Stirnseiten die vorstehend bereits angedeuteten stirnseitigen Kupplungsmittel auf, welche mit fahrzeugseitigen Gegenkupplungsmitteln zusammenwirken und welche grundsätzlich beispielsweise durch die DE 197 39 625 C1 bekannt sind.

Durch diese stirnseitigen Kupplungsmittel hat die Erfindung folgende zusätzliche Anwendungsmöglichkeit geschaffen: Sämtliche oder einzelne Sitzlehnen können nach Lösen der längsseitigen Kupplungsmittel der Aufnahmehalterung nach vorn geschwenkt bzw. einzelne oder sämtliche Sitze können im Bedarfsfall entfernt werden, während die Aufnahmehalterung mittels ihrer stirnseitigen Kupplungsmittel in den fahrzeugseitigen Gegenkupplungsmitteln gehalten ist.

Hinzu kommt, dass in weiterer Ausgestaltung der Erfindung in analoger oder korrespondierender Anordnung zueinander jedem stirnseitigen Kupplungsmittel mehrere fahrzeugseitige Gegenküpplungsmittel zugeordnet sein können. So können die fahrzeugseitigen Gegenkupplungsmittel beispielsweise jeweils in einer horizontalen Reihe angeordnet sein (was durch die EP 524 397 B1 an sich bekannt ist), so dass die Aufnahmehalterung in Fahrtrichtung oder entgegen der Fahrtrichtung mit Hilfe der stirnseitigen Kupplungsmittel versetzt angebracht werden kann, was zweckmäßig mit einem entsprechenden stufenweisen Versatz (in Längsrichtung des Fahrzeugs) der Sitze zu kombinieren ist.

Die erfindungsgemäße Laderaum-Abdeck- und/oder Trennvorrichtung eignet sich besonders für eine Anwendung in Verbindung mit Einzelsitzen, wie sie heute in Multivans oder in mpv (multi purpose vehicle) üblich sind.

Zur Anbringung der Aufnahmehalterung werden im Unterschied zu der eingangs erwähnten bekannten wenig bedienungsfreundlichen Schwalbenschwanz-Formschlussbefestigung gemäß der DE 43 36 380 C2 erfindungsgemäß mittels Betätigungselemente funktionell bedienbare Kupplungsmittel, welche mit Gegenkupplungsmitteln zusammenwirken, verwendet. Hierzu bieten sich besonders Schnellkupplungsmittel, z.B. in Form von Steckkupplungsmitteln, an, bei welchen etwa patrizenartige Vorsprünge (Kupplungsmittel) in ver- und entriegelbaren Hinterschneidungen von matrizenförmigen Aufnahmen (Gegenkupplungsmittel) gehalten sind.

Weitere Ausgestaltungen der Erfindung ergeben sich aus den Unteransprüchen.

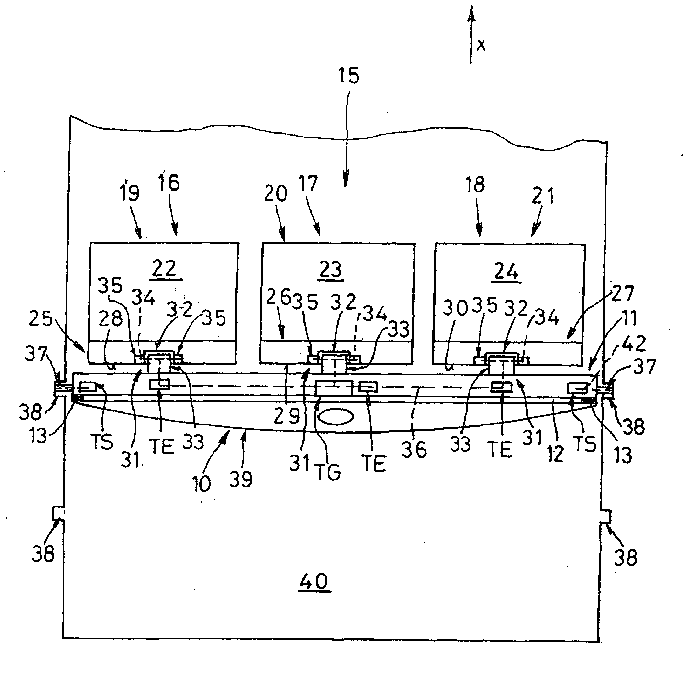

In der Zeichnung ist ein bevorzugtes Ausführungsbeispiel entsprechend der Erfindung schematisch dargestellt.

Eine Laderaum-Abdeck- und/oder Trennvorrichtung, im folgenden kurz "Vorrichtung" genannt, ist insgesamt mit der Bezugsziffer 10 versehen.

Die Vorrichtung 10 weist eine Aufnahmehalterung in Form eines Rollogehäuses 11 auf, welches eine Werkstoffbahn oder mehrere Werkstoffbahnen enthalten kann. Im vorliegenden Falle sind in dem Rollogehäuse 11 eine Netzbahn, die vertikal aufgespannt werden kann und eine horizontal aufspannbare Abdeck-Rollobahn jeweils auf einer eigenen Wickelwelle aufgenommen. Die Werkstoffbahnen sind entgegen dem Rückstellmoment je eines einer jeden Wickelwelle zugeordneten Federmotors aus dem Rollogehäuse 11 ausziehbar.

Die Netzbahn selbst ist nicht sichtbar, jedoch ist die am freien Rand der Netzbahn befestigte Haltestange 12 mit ihren angedeuteten endseitigen Halteenden 13 schematisch dargestellt. Die Halteenden 13 können in nicht gezeigter Weise benachbart dem Fahrzeugdach innenraumseitig eines Kombinationskraftwagens 14 lösbar eingehängt werden. Der Kombinationskraftwagen 14 ist lediglich durch Umrisslinien seines Innenraumes teilweise dargestellt.

Der Kombinationskraftwagen 14 enthält als Sitzanordnung eine Fond-Sitzreihe 15, welche aus drei Einzelsitzen 16, 17, 18 besteht. Die Sitzpolster sind mit 19, 20, 21, die Sitzflächen mit 22, 23, 24 und die Sitzlehnen mit 25, 26, 27 bezeichnet. Die Sitzlehnen-Rückseiten tragen die Bezugsziffern 28, 29, 30.

Entsprechend der Anzahl der Einzelsitze 16, 17, 18 weist das Rollogehäuse 10 drei längsseitige Kupplungsmittel 31 auf, welche mit sitzlehnenseitigen Gegenkupplungsmitteln 32 lösbar in Eingriff zu versetzen sind.

Die längsseitigen Kupplungsmittel 31 weisen jeweils einen Kupplungsvorsprung 33 mit gestrichelt eingetragenen, beidseitig quer zur Fahrtrichtung x vorstehenden Riegelvorsprüngen 34 auf, welche in Hinterschneidungsräume 35 der sitzlehnenseitigen Kupplungsmittel 32 verriegelnd eingeschoben bzw. einschnappen und entriegelnd herausgezogen werden können. Die Betätigung aller Riegelvorsprünge 34 der längsseitigen Kupplungsmittel 31 kann entweder selektiv, für jedes einzelne längsseitige Kupplungsmittel 31 gesondert, über einzelne mechanische Betätigungstasten TE oder, miteinander kombiniert für sämtliche längsseitigen Kupplungsmittel 31, über eine gemeinsame Betätigungstaste TG erfolgen.

Das Betätigungsgestänge zwischen den Einzeltasten TE und der gemeinsamen Betätigungstaste TG einerseits und den Riegelvorsprüngen 34 andererseits ist mittels gestrichelter Linien angedeutet und insgesamt mit 36 bezeichnet.

Das Rollogehäuse 11 weist außerdem an beiden Stirnseiten stirnseitige Kupplungsmittel 37 auf, welche mit fahrzeugseitigen Gegenkupplungsmitteln in Form von Halteaussparungen 38 zusammenwirken.

Die stirnseitigen Kupplungsmitteln 37 sind von quer zur Fahrtrichtung x aus dem Rollogehäuse 11 ein- und ausfahrbaren Riegelzapfen gebildet. Jedes stirnseitige Kupplungsmittel 37 ist gesondert mittels einer Betätigungstaste TS über ein gestrichelt eingetragenes Betätigungsgestänge 42 im Entriegelungssinne zu betätigen.

Die Verwendungsweise der Vorrichtung 10 läßt sich wie folgt beschreiben:

Während sich die längsseitigen Kupplungsmittel 31 und die sitzlehnenseitigen Kupplungsmittel 32 in Eingriff befinden, lassen sich nach Entriegelungsbetätigung der Betätigungstasten TS alle Sitzlehnen 25, 26, 27 gemeinsam mit dem Rollogehäuse 11 nach vom schwenken. Diese Anordnung lässt für den Bedarfsfall auch eine selektive wahlweise Abkupplung von einer Sitzlehne oder von zwei Sitzlehnen zu.

Andererseits ist es möglich, sämtliche oder wahlweise einzelne Sitzlehnen 25, 26, 27 entweder durch Betätigung der gemeinsamen Betätigungstaste TG oder durch selektive Betätigung der Einzelbetätigungstasten TE vom Rollogehäuse 11 abzukuppeln, während die stirnseitigen Kupplungsmittel 37 und die fahrzeugseitigen Gegenkupplungsmittel 38 sich in Eingriff befinden.

Auf diese Weise ist es möglich, einzelne oder sämtliche Sitzlehnen 25, 26, 27 ohne das Rollogehäuse 11 nach vom zu verschwenken oder im Bedarfsfalle sämtliche oder alle Einzelsitze 16, 17, 18 aus dem Fahrzeug 14 zu entfernen.

Für den Fall, dass das Rollogehäuse 11 gänzlich aus dem Fahrzeug 14 entfernt werden soll, werden die beiden Betätigungstasten TS und die Gesamtbetätigungstaste TG zugleich betätigt. Um für diesen Fall den Ausbau zusätzlich zu erleichtern, kann es in nicht dargestellter Weise zweckmäßig sein, beide einzelnen Betätigungstasten TS mit einer alternativ zu betätigenden gesonderten Gesamtbetätigungstaste zu kombinieren.

Ergänzend sei noch erwähnt, dass an den freien Rand der nicht dargestellten horizontal aufspannbaren Werkstoffbahn ein Endbord 39 befestigt ist, welches in nicht gezeigter Weise heckseitig im Laderaum 40, beispielsweise innenseitig an der Heckklappe 41, lösbar eingehängt sein kann.

Um im vorliegenden Falle die Fondsitzreihe 15 nach hinten versetzen zu können oder in nicht dargestellter Weise eine zusätzliche Fondsitzreihe einbauen zu können, sind weiter hinten im Fahrzeug 14 zusätzliche fahrzeugseitige Gegenkupplungsmittel 38 in den Seitenwänden des Fahrzeuges 14 vorgesehen, welche eine versetzte Ankupplung des Rollogehäuses 11 entgegen der Fahrtrichtung x nach hinten gestatten.

## Patentansprüche

1. Laderaum-Abdeck- und/oder Laderaum-Trennvorrichtung (10), für den Lade- oder Gepäckraum (40) eines Fahrzeugs (14), wie z.B. eines Kombinationskraftwagens, mit einer Aufnahmehalterung (11), wie z.B. mit einem Rollogehäuse, für mindestens eine Werkstoffbahn, deren innenseitiger Randbereich seitens der Aufnahmehalterung (11), z.B. an einer Wickelwelle, befestigt, und deren endseitiger freier Randbereich fahrzeugseitig lösbar zu befestigen ist, wobei die Aufnahmehalterung (11) lehnenrückseitig (bei 28, 29, 30) einer mindestens zweisitzigen, mindestens zwei Sitzlehnen (25, 26, 27) aufweisenden, Sitzanordnung (15) gehalten ist, wobei alle Sitzlehnen (25, 26, 27) bezüglich der ihnen jeweils zugeordneten Sitzfläche (22, 23, 24) schwenkarretierbar sind, wobei die Aufnahmehalterung (11) für jede schwenkbare Sitzlehne (25, 26, 27) längsseitige Kupplungsmittel (31) aufweist, welche jeweils lösbar mit sitzlehnenseitigen Gegenkupplungsmitteln (32) zusammenwirken, **dadurch gekennzeichnet, daß** die längsseitigen Kupplungsmittel (31) und/oder die sitzlehnenseitigen Gegenkupplungsmittel (32) unabhängig voneinander gesondert oder gemeinsam zu betätigen sind, und daß an den beiden Stirnseiten der Aufnahmehalterung (11) stirnseitige Kupplungsmittel (37) angeordnet sind, und wobei jedes stirnseitige Kupplungsmittel (37) mit mindestens einem fahrzeugseitigen Gegenkupplungsmittel (38) lösbar zusammenwirkt.

2. Laderaum-Abdeck- und/oder Laderaum-Trennvorrichtung nach Anspruch 1, **dadurch gekennzeichnet, dass** die stirnseitigen Kupplungsmittel (37) und/oder die fahrzeugseitigen Gegenkupplungsmittel (38) unabhängig voneinander gesondert zu betätigen sind.

3. Laderaum-Abdeck- und/oder Laderaum-Trennvorrichtung nach Anspruch 1, **dadurch gekennzeichnet, dass** die stirnseitigen Kupplungsmittel (37) und/oder die fahrzeugseitigen Gegenkupplungsmittel (38) gemeinsam, insbesondere synchron, zu betätigen sind.

4. Laderaum-Abdeck- und/oder Laderaum-Trennvorrichtung nach Anspruch 1, **dadurch gekennzeichnet, dass** die gemeinsame Betätigung der längsseitigen Kupplungsmittel (31) und/oder der sitzlehnenseitigen Gegenkupplungsmittel (32) synchron erfolgt.

5. Laderaum-Abdeck- und/oder Laderaum-Trennvorrichtung nach einem der Ansprüche 1 bis 4, **dadurch gekennzeichnet, dass** die Kupplungsmittel (31, 37) und/oder die Gegenkupplungsmittel (32, 38) mechanisch oder elektromechanisch zu betätigen sind.

6. Laderaum-Abdeck- und/oder Laderaum-Trennvorrichtung nach Anspruch 5, **dadurch gekennzeichnet, dass** die mechanische oder elektromechanische Betätigung der Kupplungsmittel (31, 37) und/oder der Gegenkupplungsmittel (32, 38) über Handbetätigungsmittel, wie z.B. über Tasten (TE, TG, TS), Drucktasten, Hebel od. dgl., erfolgt.

7. Laderaum-Abdeck- und/oder Laderaum-Trennvorrichtung nach Anspruch 6, **dadurch gekennzeichnet, dass** seitens der Aufnahmehalterung (11) mechanische Handbetätigungsmittel, wie z.B. Drucktasten (TE, TG, TS), Hebel od. dgl., über Bowdenzüge oder über Betätigungsgestänge (36, 42) mit den längsseitigen (34) und/oder den stirnseitigen Kupplungsmitteln (37) antriebsverbunden sind.

8. Laderaum-Abdeck- und/oder Laderaum-Trennvorrichtung nach Anspruch 7, **dadurch gekennzeichnet, dass** die Kupplungsmittel oder die Gegenkupplungsmittel (32, 38) hinterschnittene Riegelaussparungen (35, 38) und die Gegenkupplungsmittel oder die Kupplungsmittel (31, 37) mit den hinterschnittenen Riegelaussparungen zusammenwirkende Dreh- oder Schieberiegel (34) bilden.

9. Laderaum-Abdeck- und/oder Laderaum-Trennvorrichtung nach einem der Ansprüche 1 bis 8, **dadurch gekennzeichnet, dass** in analoger und korrespondierender Anordnung zueinander jedem stirnseitigen Kupplungsmittel (37) mehrere fahrzeugseitige Gegenkupplungsmittel (38) zugeordnet sind.

## Claims

1. Loading space covering device and/or loading space separating device (10) for the loading or luggage space (40) of a vehicle (14), such as an estate vehicle for example, having a receiving holder (11), for example, a roller blind housing, for at least one material web, the inside edge region of which at the receiving holder (11) side is fixed, for example, to a winding roller, and the free edge region of which is to be releasably fixed at its end to the vehicle, wherein the receiving holder (11) is held on the seat-back (at 28, 29, 20) of an at least two-seat seat arrangement (15) comprising at least two seat-backs (25, 26, 27), all seat-backs (25, 26, 27) being pivot-lockable with respect to their respective associated seat (22, 23, 24), the receiving holder (11) having for each pivotable seat-back (25, 26, 27) long-side coupling means (31), each of which co-operates releasably with seat-back counterpart coupling means (32), **characterised in that** the long-side coupling means (31) and/or the counterpart coupling means (32) on the seat-back are to be separately operated independently of one another or jointly operated, and **in that** end-face coupling means (37) are arranged at the two ends of the receiving holder (11), and each end-face coupling means (37) co-operates releasably with at least one counterpart coupling means (38) on the vehicle.

2. A loading space covering device and/or loading space separating device according to claim 1, **characterised in that** the end-face coupling means (37) and/or the counterpart coupling means (38) on the vehicle are to be separately operated independently of one another.

3. A loading space covering device and/or loading space separating device according to claim 1, **characterised in that** the end-face coupling means (37) and/or the counterpart coupling means (38) on the vehicle are to be operated jointly, especially synchronously.

4. A loading space covering device and/or loading space separating device according to claim 1, **characterised in that** the joint operation of the long-side coupling means (31) and/or the seat-back counterpart coupling means (32) is effected synchronously.

5. A loading space covering device and/or loading space separating device according to any one of claims 1 to 4, **characterised in that** the coupling means (31, 37) and/or the counterpart coupling means (32, 38) are to be operated mechanically or electromechanically.

6. A loading space covering device and/or loading space separating device according to claim 5, **characterised in that** the mechanical or electromechanical operation of the coupling means (31, 37) and/or of the counterpart coupling means (32, 38) is effected by manual operating means, for example, via buttons (TE, TG, TS), push-buttons, levers or the like.

7. A loading space covering device and/or loading space separating device according to claim 6, **characterised in that**, in respect of the receiving holder (11), mechanical manual operating means, such as push-buttons (TE, TG, TS), levers or the like are connected in respect of drive via Bowden wires or via operating linkages (36, 42) to the long-side coupling means (31) and/or to the end-face coupling means (37).

8. A loading space covering device and/or loading space separating device according to claim 7, **characterised in that** the coupling means or the counterpart coupling means (32, 38) form undercut locking bolt recesses (35, 38) and the counterpart coupling means or the coupling means (31, 37) form turning or push-type locking bolts (34) co-operating with the undercut locking bolt recesses.

9. A loading space covering device and/or loading space separating device according to any one of claims 1 to 8, **characterised in that** in analogous and corresponding arrangement to one another, a plurality of vehicle-mounted counter-part coupling means (38) are associated with each end-face coupling means (37).

## Revendications

1. Dispositif de recouvrement (10) d'un espace de chargement et/ou de séparation d'un espace de chargement, pour l'espace de chargement ou de bagages (40) d'un véhicule (14), comme par exemple d'un véhicule de type break, comprenant une fixation de logement (11), comme par exemple un bâti de store enroulable, pour au moins une bande de matériau dont la zone de bordure intérieure, du côté de la fixation de logement (11), est fixée par exemple sur un arbre d'enroulement, et dont la zone de bordure libre, côté extrémité, est à fixer, de manière amovible, côté véhicule, où est tenue la fixation de logement (11), côté face arrière des dossiers (en 28, 29, 30), d'une disposition de sièges (15) présentant au moins deux dossiers de sièges (25, 26, 27) d'au moins deux sièges, où tous les dossiers de sièges (25, 26, 27) peuvent basculer par rapport à leur surface d'assise respectivement associée (22, 23, 24), où la fixation de logement (11) pour chaque dossier de siège rabattable (25, 26, 27) présente des moyens d'attache (31), côté longitudinal, qui, en étant détachables, agissent en association avec des moyens d'attache inverses (32), côté dossier de siège,
**caractérisé**
**en ce que** les moyens d'attache (31), côté longitudinal et/ou les moyens d'attache inverses (32), côté dossier de siège, sont à actionner indépendamment les uns des autres, séparément ou ensemble, et
**en ce que** des moyens d'attache (37), côté frontal, sont disposés sur les deux faces frontales de la fixation de logement (11), et
où chaque moyen d'attache (37), côté frontal, agit en association, de manière détachable, avec au moins un moyen d'attache inverse (38), côté véhicule.

2. Dispositif de recouvrement d'un espace de chargement et/ou de séparation d'un espace de chargement selon la revendication 1, **caractérisé en ce que** les moyens d'attache (37), côté frontal, et/ou les moyens d'attache inverses (38), côté véhicule, sont à actionner séparément, indépendamment les uns des autres.

3. Dispositif de recouvrement d'un espace de chargement et/ou de séparation d'un espace de chargement selon la revendication 1, **caractérisé en ce que** les moyens d'attache (37), côté frontal, et/ou les moyens d'attache inverses (38), côté véhicule, sont à actionner ensemble, en particulier de manière synchronisée.

4. Dispositif de recouvrement d'un espace de chargement et/ou de séparation d'un espace de chargement selon la revendication 1, **caractérisé en ce que** l'actionnement commun des moyens d'attache (31), côté longitudinal, et/ou des moyens d'attache inverses (32), côté dossier de siège, est effectué de manière synchronisée.

5. Dispositif de recouvrement d'un espace de chargement et/ou de séparation d'un espace de chargement selon l'une quelconque des revendications 1 à 4, **caractérisé en ce que** les moyens d'attache (31, 37) et/ou les moyens d'attache inverses (32, 38) sont à actionner de manière mécanique ou électromécanique.

6. Dispositif de recouvrement d'un espace de chargement et/ou de séparation d'un espace de- chargement selon la revendication 5, **caractérisé en ce que** l'actionnement mécanique ou électromécanique des moyens d'attache (31, 37) et/ou des moyens d'attache inverses (32, 38) est effectué par des moyens d'actionnement manuel, comme par exemple par des touches (TE, TG, TS), des boutons-poussoirs, des leviers ou par des moyens d'un type analogue.

7. Dispositif de recouvrement d'un espace de chargement et/ou de séparation d'un espace de chargement selon la revendication 6, **caractérisé en ce que**, du côté de la fixation de logement (11), des moyens mécaniques d'actionnement manuel, comme par exemple des boutons-poussoirs (TE, TG, TS), des leviers ou des moyens d'un type analogue, sont reliés, par entraînement, aux moyens d'attache (34), côté longitudinal, et/ou aux moyens d'attache (37), côté frontal, via des câbles Bowden ou via des tringleries d'actionnement (36, 42).

8. Dispositif de recouvrement d'un espace de chargement et/ou de séparation d'un espace de chargement selon la revendication 7, **caractérisé en ce que** les moyens d'attache ou les moyens d'attache inverses (32, 38) forment des évidements de verrouillage (35, 38) formés par des contre-dépouilles, et les moyens d'attache inverses ou les moyens d'attache (31, 37) forment des loquets rotatifs ou des targettes coulissantes (34) fonctionnant en association avec les évidements de verrouillage formés par des contre-dépouilles.

9. Dispositif de recouvrement d'un espace de chargement et/ou de séparation d'un espace de chargement selon l'une quelconque des revendications 1 à 8, **caractérisé en ce que**, dans un agencement analogue et correspondant, les uns par rapport aux autres, plusieurs moyens d'attache inverses (38), côté véhicule, sont associés à chaque moyen d'attache (37), côté frontal.
